## Europäisches Patentamt

## European Patent Office

## Office européen des brevets

(19)

(11) Veröffentlichungsnummer: **0 049 418**
**B1**

(12)

# EUROPÄISCHE PATENTSCHRIFT

(45) Veröffentlichungstag der Patentschrift:
12.12.84

(21) Anmeldenummer: 81107518.3

(22) Anmeldetag: 22.09.81

(51) Int. Cl.³: **E 06 B 9/264,** A 47 H 23/10,
E 06 B 9/24, F 24 J 3/02

(54) Teilweise lichtdurchlässiges Rollo mit beidseitig voneinander unterschiedlich ausgebildeter Oberfläche.

(30) Priorität: 04.10.80 DE 3037668

(43) Veröffentlichungstag der Anmeldung:
14.04.82 Patentblatt 82/15

(45) Bekanntmachung des Hinweises auf die Patenterteilung:
12.12.84 Patentblatt 84/50

(84) Benannte Vertragsstaaten:
AT BE CH DE FR GB IT LI LU NL SE

(56) Entgegenhaltungen:
AT - B - 167 145
DE - A - 2 433 859
DE - A - 2 610 370
DE - A - 2 642 266
DE - A - 2 840 023
DE - A - 2 841 966
DE - A - 2 904 505
DE - A - 2 923 251
DE - C - 921 885
DE - C - 1 139 953
US - A - 2 625 689

(73) Patentinhaber: Iduso Gesellschaft zur Förderung und Verwertung kreativer Ideen mbH, Am Lenkert 11, D-5300 Bonn 2 (DE)

(72) Erfinder: Der Erfinder hat auf seine Nennung verzichtet

(74) Vertreter: Patentanwaltsbüro Cohausz & Florack, Schumannstrasse 97, D-4000 Düsseldorf 1 (DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

## Beschreibung

Die Erfindung betrifft ein teilweise lichtdurchlässiges Rollo mit beidseitig von einander unterschiedlich ausgebildeter Oberfläche (reflektierend bzw. nicht reflektierend), durch das die durch ein Fenster eines Raumes einstrahlende Sonnenenergie wahlweise je nach Art der Rollo-Aufhängung (mit der reflektierenden Oberfläche zum Fenster hin oder zum Raum hin) abgestrahlt (reflektiert) oder in Wärme umgewandelt (kollektioniert) wird.

Derartige Rollos sind bereits bekannt (vgl. DE-A-2 642 266, Fig. 7). Dort besteht aber das Rollo aus Kunststoff, dessen eine Oberfläche mit einem Metalloxyd blank überzogen ist, während die andere Oberfläche mit einer schwarzen Überzugsmasse versehen ist. Die Verwendung von Kunststoffolie hat allerdings den Nachteil, daß diese sich beim Erhitzen der schwarzen Seite durch Sonneneinstrahlung stärker dehnt und das Rollo seine Form verändert. Außerdem ist die mit Metalloxyd überzogene Seite gegen Abrieb, der beim Auf- und Abrollen des Rollos unvermeidlich auftritt, sehr empfindlich. Schließlich hat Kunststoffolie in der hier erforderlichen Dichte eine nur geringe Wärmeleitfähigkeit, so daß die Wärmeübertragung von der Kollektorzur Reflektorseite beeinträchtigt ist.

Es ist ferner aus der AT-B-167 145 ein Rollo bekannt, das aus einem einseitig mit einer reflektierenden Metallschicht versehenen Gewebe besteht. Dort ist auch vorgesehen, die Schnittränder des Rollos so zu verstärken (vgl. Seite 2, Zeile 5—8), daß ein Ausfransen und damit ein Endeln an den Schnitträndern vermieden wird. Das die Metallschicht tragende Gewebe ist jedoch nicht dafür vorgesehen, die einfallenden Lichtstrahlen in Wärme umzuwandeln. Das Rollo ist nur zur Wärme-Reflexion, nicht aber zur Wärme-Kollektion eingerichtet; durch das tragende Gewebe ist im übrigen die Wärmeleitung im Rollo sehr schlecht. Es eignet sich daher auch gar nicht zur Wärmekollektion und wegen der unterschiedlichen Durchmesser von Rollo und Randverstärkung ist letztere beim korrekten Auf- und Abwickeln des Rollos hinderlich. Rollos mit Randverstärkung sind daher praktisch unbrauchbar.

Der Erfindung liegt daher die Aufgabe zugrunde, die Nachteile der bisher bekannten Rollos zu vermeiden, die darin bestehen, daß diese entweder Wärme kaum kollektionieren oder keine Maßnahmen zur guten Wärmeübertragung zwischen kollektionierender und abstrahlender Oberfläche besitzen, so daß Überhitzungen mit Brandgefahr einerseits wie andererseits schnelle Zerstörung durch Abreiben der Metallisierung sowie Abrollstörungen durch Welligwerden auftreten können.

Erfindungsgemäß ist diese Aufgabe durch die in den Patentansprüchen gekennzeichneten Maßnahmen in einfacher und sicherer Weise gelöst.

Das erfindungsgemäß nach Patentanspruch 1 ausgebildete Rollo hat durch die Verwendung von beidseitig auf einer Trägerschicht aufgebrachten Metallfolien gegenüber den bisher bekannten Rollos folgende Vorteile:

— gute Materialbeständigkeit auch im Falle hoher Strahlungsintensität,
— weitgehende Vermeidung von Brandgefahr,
— hohe Strahlungsenergieaufnahme und Umsetzung in Wärmeenergie auf der Kollektionsseite,
— gute Wärmetransparenz zur Rauminnenseite hin; hierdurch wird auch eine Überhitzung vermieden,
— hohe Materialstabilität gegenüber mechanischen Beanspruchungen,
— Minimierung von Einwellungen an den Rändern infolge unterschiedlicher Dehnungskoeffizienten der verwendeten Rolloschichten.

Das nach Patentanspruch 2 nur zweischichtig aufgebaute Rollo, bei dem auf die Trägerschicht nur einseitig eine Metallfolie aufgebracht ist, hat gegenüber den bisher bekannten Rollos folgende Vorteile:

— hohe Strahlungsenergieaufnahme und Umsetzung in Wärmeenergie auf der Kollektionsseite,
— bessere Wärmetransparenz durch innenliegende auf der Metallfolie aufgebrachte schwarze Kollektorschicht,
— welche die von der Trägerschicht nach innen abgestrahlte Wärme der Metallfolie besonders gut zuführt,
— gute Materialbeständigkeit, auch im Falle hoher Strahlungsintensität und bei mechanischen Beanspruchungen,
— billige Ausführung mit trotzdem guter Wirkung.

Zur Sicherung der notwendigen Flexibilität des Rollobezuges ist eine geringe Dicke der wärmeleitenden Metallfolien zweckmäßig. Vorteilhaft ist es, wenn sie z. B. jeweils 0,02 mm, besser noch 0,01 mm nicht überschreitet. Im Falle der Kollektion kann der erwünschte höhere Wärmedurchgang dadurch weiter verbessert werden, daß alle Schichten auf der Kollektionsseite (auch, wenn sie im Inneren des Bezuges liegen) tief schwarz gefärbt sind.

Da ein bewohnter Raum einen gewissen Lichteinfall erfordert, wird dieser z. B. durch entsprechende Perforation des Rollos erreicht, wobei die Löcher erfahrungsgemäß im Normalfall 5—10% der Rollofläche ausmachen sollten. In diesem Falle steht zur Wärmekollektion, also zur Raumheizung durch Sonneneinstrahlung auf das Rollo, somit eine Heizfläche von mindestens 90% der Rollofläche zur Verfügung.

Ausführungsbeispiele der Erfindung sind in den Zeichnungen dargestellt. Es zeigt

Fig. 1 das erfindungsgemäße Rollo in Draufsicht,

Fig. 2 das erfindungsgemäße Rollo mit dreischichtigem Aufbau im Schnitt,

Fig. 3 das erfindungsgemäße Rollo mit zweischichtigem Aufbau im Schnitt,

Fig. 4 eine Rollohalterung mit Wendemöglichkeit für das Rollo.

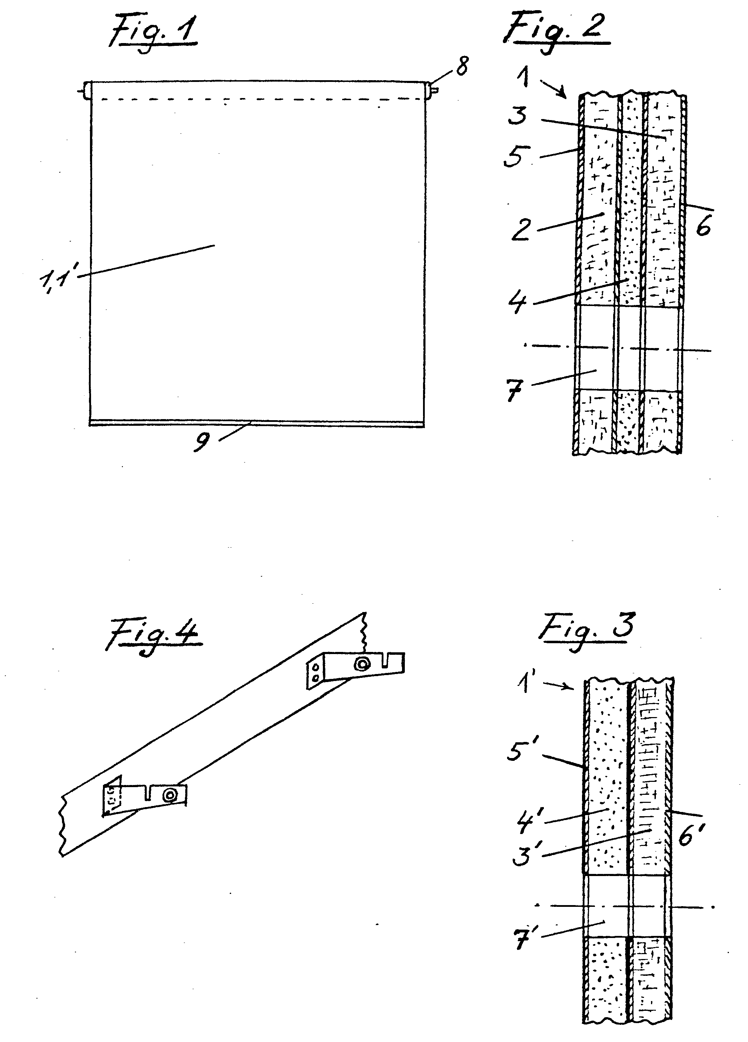

In Fig. 1 ist das erfindungsgemäße, komplette Rollo 1, 1', das in nicht näher dargestellter Weise perforiert oder auf andere Weise lichtdurchlässig sein kann, mit Wickelrolle 8 und Beschwerungsstab 9 dargestellt.

Fig. 2 zeigt den dreischichtigen Aufbau des Rollos 1 im Schnitt. Das Rollo besteht aus einer Metallfolie 2, einer dünnen Trägerschicht 4 und einer zweiten Metallfolie 3. Die Metallfolie 3 ist auf der Außenseite, die als Reflexionsseite 6 dient, blank geglänzt oder superweiß, während Metallfolie 2 auf der Außenseite, die als Kollektionsseite 5 dient, schwarz oder superschwarz eingefärbt ist. Die Trägerschicht 4 ist so dünn bzw. grobmaschig gestaltet, daß bei Benutzung als Raumheizung die von der Kollektionsseite 5 gesammelte Sonnenwärme möglichst ungehindert zur Reflexionsseite 6 durchdringen kann, von wo sie in den zu wärmenden Raum durch Strahlung und Wärmeleitung übertragen wird.

Umgekehrt ist die geglänzte bzw. reinweiße Reflexionsseite 6 in der Lage, die einstrahlende Sonnenenergie durch Reflexion weitgehend vom kühl zu haltenden Wohnraum fernzuhalten. Zur Umschaltung von Raumheizung auf Raumkühlhaltung ist das Rollo 1 in seiner Halterung lediglich umzuwenden, so daß im ersten Fall die Kollektionsseite 5 und im zweiten Fall die Reflexionsseite 6 der Sonne zugewendet sein muß. Zur besseren Wärmeübertragung von Metallfolie 2 zur Trägerschicht 4 und auf Metallfolie 3 können die Trägerschicht 4 sowie die anliegenden Seiten der Metallfolien ebenfalls schwarz eingefärbt sein. Teil 7 stellt ein Loch der Perforation des dreischichtigen Rollos dar.

In Fig. 3 ist ein Rollo 1' dargestellt, das nur aus einer Metallfolie 3' besteht, die auf der Außenseite 6' reflektierend und auf der anderen Seite schwarz eingefärbt ist, mit der die Metallfolie 3' an der dünnen Trägerschicht 4' anliegt. Die Trägerschicht 4' ist durchgehend schwarz eingefärbt, so daß ihre freiliegende Außenfläche 5' gleichzeitig kollektioniert. Teil 7' stellt ein Loch der Perforation des zweischichtigen Rollos dar.

Fig. 4 zeigt ein Beispiel einer Rollohalterung, die das wechselweise Einsetzen des Rollos als Sonnenwärme-Kollektor oder gewendet als Sonnenwärme-Reflektor gestattet.

Die als Mittelträger des Rollos dienende hauchdünne Trägerschicht kann eine dünne Kunststoffolie von ca. 0,01 mm Dicke bzw. Kunststoffgaze (z. B. weitmaschiges, dünnes Perlongewebe, Perlonnetz) oder Metalldrahtnetz sein. Sie erhöht zugleich die Stabilität und Flexibilität der ansonsten empfindlichen und wenig elastischen Metallfolien, macht also das Rollo für den praktischen Einsatz biegsam und knitterfrei und erzeugt als Gewebe oder Netz zusätzlich eine dekorative, prägungsartige Oberfläche. Auch eine dünne Papierschicht kann für preiswerte Rollos als Trägerschicht verwendet werden.

Zur Umschaltung von Wärmekollektion auf Wärmereflexion wird das Rollo aus seiner in Fig. 4 dargestellten Halterung genommen, lediglich umgewendet und wiederum in die Halterung eingesetzt. Wenn zuerst die Kollektionsseite (5, 5') auf der Sonnenseite war, zeigt jetzt die Reflexionsseite (6, 6') dorthin.

Der Effekt der Reflexion bzw. der Kollektion wird jeweils dadurch verstärkt, daß extrem wärmetransparentes Material in der Anordnung: Metallfolie, Trägerschicht, Metallfolie verwendet wird und die Folien an der zur Absorption verwendeten Seite tiefschwarz gefärbt, an der der Reflexion zugewandten Seite blank bzw. weiß sind. Dadurch wird einerseits die Wärmedurchlässigkeit der Rolloschichten erhöht und andererseits deren Wärmereflexion verstärkt.

Die lediglich durch die hauchdünne Trägerschicht verbundenen Metallfolien gewährleisten eine so hohe Wärmeleitfähigkeit des Rollos, daß die bei den bisher bekannten Rollos auftretende Einwellung an den Rändern sowohl bei der Reflexionsstellung als auch bei der Kollektionsstellung praktisch unterbleibt.

Die Verwendung von Metallfolien (Aluminium oder Kupfer) geben dem Rollo eine unbegrenzte Haltbarkeit, auch bei stärkster Sonnenbestrahlung.

Die wechselseitige Verwendung des Rollos für die Reflexion und für die Kollektion von Sonnenenergie an Fenstern und Wohnräumen ist nicht das einzige Anwendungsgebiet der Erfindung. Die Nutzung des beschriebenen Rollos in Treibhäusern zur Unterstützung für die Raumheizung und zur Erzeugung von Warmluft, deren Wärme gespeichert und in der Nacht aus dem Wärmespeicher wieder zur Heizung entnommen wird, ist ein weiteres vorteilhaftes Anwendungsgebiet. In diesem Fall ist die Stärke der Lichtdurchlässigkeit dem Lichtbedürfnis der Pflanzen entsprechend zu wählen.

Dank der geringen Kosten des Rollos ist seine Installierung zur Gewinnung von Heizenergie außerordentlich wirtschaftlich. Die Einführung des Rollos und seine möglichst weite Verbreitung ist daher nicht nur volkswirtschaftlich erwünscht, sondern auch betriebswirtschaftlich rentabel im Gegensatz zu zahlreichen anderen vorgeschlagenen Energiesparmaßnahmen.

## Patentansprüche

1. Teilweise lichtdurchlässiges Rollo mit beidseitig voneinander unterschiedlich ausgebildeter Oberfläche (reflektierend bzw. nichtreflektierend), durch das die durch ein Fenster eines Raumes einstrahlende Sonnenenergie wahlweise je nach Art der Rollo-Aufhängung (mit der reflektierenden Oberfläche zum Fenster hin oder zum Raum hin) abgestrahlt (reflektiert) oder in Wärme umgewandelt (kollektioniert) wird, dadurch gekennzeichnet, daß das Rollo (1) aus zwei Metallfolien (2, 3) besteht, die auf der Kollektionsseite (5) schwarz oder tiefschwarz eingefärbt und auf der Reflexionsseite (6) blank oder reinweiß sind und die unterschiedlich je auf einer der beiden Seiten einer dünnen Trägerschicht (4) aufgebracht sind.

2. Teilweise lichtdurchlässiges Rollo mit beidseitig voneinander unterschiedlich ausgebildeter Oberfläche (reflektierend bzw. nichtreflektierend), durch das die durch ein Fenster eines Raumes einstrahlende Sonnenenergie wahlweise je nach Art der Rollo-Aufhängung (mit der reflektierenden Oberfläche zum Fenster hin oder zum Raum hin) abgestrahlt (reflektiert) oder in Wärme umgewandelt (kollektioniert) wird, wobei das Rollo (1') aus einer Trägerschicht (4') und einer auf einer Seite der Trägerschicht (4') aufgebrachten blanken Metallfolie (3') besteht, dadurch gekennzeichnet, daß die Metallfolie (3') auf der Außenseite (6') reflektierend und auf der der Trägerschicht zugewandten Seite schwarz eingefärbt ist.

3. Rollo nach Patentanspruch 1 oder 2, dadurch gekennzeichnet, daß die dünne Trägerschicht (4, 4') aus einer gut wärmeleitenden Kunststoff-Folie besteht.

4. Rollo nach Patentanspruch 1 oder 2, dadurch gekennzeichnet, daß die dünne Trägerschicht (4, 4') aus einem weitmaschigen Gewebe besteht.

5. Rollo nach Patentanspruch 1 oder 2, dadurch gekennzeichnet, daß die dünne Trägerschicht (4, 4') aus einem Netz besteht.

6. Rollo nach Patentanspruch 5, dadurch gekennzeichnet, daß das Netz aus Metall besteht.

7. Rollo nach den Patentansprüchen 1 oder 2, dadurch gekennzeichnet, daß die Metallfolien (2, 3) bzw. (3') auf die dünne Trägerschicht (4, 4') aufgeklebt sind.

8. Rollo nach den Patentansprüchen 1 bis 7, dadurch gekennzeichnet, daß auch die Trägerschicht (4, 4') schwarz eingefärbt ist.

9. Rollo nach Patentanspruch 1, dadurch gekennzeichnet, daß zusätzlich mindestens die mit ihrer Reflexionsschicht (6) außen liegende Metallfolie (3) auf ihrer auf der Trägerschicht (4) aufgebrachten Seite schwarz eingefärbt ist.

10. Rollo nach den Patentansprüchen 1 oder 2, dadurch gekennzeichnet, daß dieses je nach Grad der geforderten Lichtdurchlässigkeit eine mehr oder weniger starke Perforation in der Form von Löchern (7) aufweist.

## Claims

1. A partially light-transmissive rollerblind having relatively differently constructed surfaces (reflecting and non-reflecting) on the two sides thereof by means of which the solar energy which is radiated into a room through a window is selectively radiated outwards (reflected) or converted into heat (collected) depending on the mode of suspension of the rollerblind (with the reflecting side facing the window or facing the room interior), characterised in that the rollerblind (1) consists of two metal foils (2, 3) which are coloured black or superblack on the collection side (5) whilst being bright or brilliant white on the reflecting side (6) and which are differentially applied to in each case one of the two sides of a thin substrate (4).

2. A partially light-transmissive rollerblind having relatively differently constructed surfaces (reflecting and non-reflecting) on the two sides thereof by means of which the solar energy which is radiated into a room through a window is selctively radiated outwards (reflected) or converted into heat (collected) depending on the mode of suspension of the rollerblind (with the reflecting side facing the window or facing the room) characterised in that the rollerblind (1') consists of a substrate (4') and a bright metal foil (3') applied to one side of the substrate (4'), characterised in that the metal foil (3') is reflecting on the outwardly directed side (6') and coloured black on that side thereof which faces the substrate.

3. A rollerblind according to claim 1 or 2, characterised in that the thin substrate (4, 4') consists of a plastics foil having good thermal conductivity properties.

4. A rollerblind according to claim 1 or 2, characterised in that the thin substrate (4, 4') is a wide-mesh woven fabric.

5. A rollerblind according to claim 1 or 2, characterised in that the thin substrate (4, 4') is a net.

6. A rollerblind according to claim 5, characterised in that the net is made of metal.

7. A rollerblind according to claim 1 or 2, characterised in that the metal foils (2, 3) or (3') are adhesively fixed to the thin substrate (4, 4').

8. A rollerblind according to claims 1 to 7, characterised in that the substrate (4, 4') is also coloured black.

9. A rollerblind according to claim 1, characterised in that, further, at least the metal foil (3) of which the reflecting layer (6) is situated on the outside is coloured black on that side thereof which is applied to the substrate (4).

10. A rollerblind according to claims 1 or 2, characterised in that it is provided with a more or less strong perforation pattern of holes (7) depending on the degree of light-transmissivity required.

## Revendications

1. Store partiellement transparent avec surfaces de constructions différentes d'un côté et de l'autre (réfléchissante ou non réfléchissante) à travers lequel l'énergie solaire rayonnant par une fenêtre d'une pièce est au choix, selon la suspension du store (avec la surface réfléchissante tournée vers la fenêtre ou vers la pièce), rayonnée (réfléchie) ou transformée en chaleur (collectée), caractérisé par le fait que le store (1) est constitué de deux feuilles métalliques (2, 3) qui sont teintées en noir ou super-noir sur la face collectrice (5) et sont polies ou super-blanches sur la face réfléchissante (6) et qui sont rapportées séparément chacune sur une des deux faces d'une couche de support mince (4).

2. Store partiellement transparent avec surfaces de constructions différentes d'un côté et de l'autre (réfléchissante ou non réfléchissante) à travers lequel l'énergie solaire rayonnant par une fenêtre d'une pièce est au choix, selon la suspension du store (avec la surface réfléchissante tournée vers la fenêtre ou vers la pièce), rayonnée (réfléchie) ou transformée en chaleur (collectée), caractérisé par le fait que le store (1') est constitué d'une couche de support (4') et d'une feuille métallique polie (3') rapportée sur une face de la couche de support (4'), caractérisé par le fait que la feuille métallique (3') est réfléchissante sur la face extérieure (6') et teintée en noir sur la face tournée vers la couche de support.

3. Store selon l'une des revendications 1 et 2, caractérisé par le fait que la couche de support mince (4') est constituée d'une feuille de matière synthétique conduisant bien la chaleur.

4. Store selon l'une des revendications 1 et 2, caractérisé par le fait que la couche de support mince (4) est constituée par un tissu à mailles larges.

5. Store selon l'une des revendications 1 et 2, caractérisé par le fait que la couche de support mince (4') est constituée d'un filet.

6. Store selon la revendication 5, caractérisé par le fait que le filet est en métal.

7. Store selon l'une des revendications 1 et 2, caractérisé par le fait que les feuilles métalliques (2, 3) ou (3') sont collées sur la couche de support mince (4, 4').

8. Store selon l'une des revendications 1 à 7, caractérisé par le fait que la couche de support (4, 4') est teintée en noir.

9. Store selon la revendication 1, caractérisé par le fait qu'en outre au moins la feuille métallique (3) dont la couche réfléchissante (6) est tournée vers l'extérieur a sa face rapportée sur la couche de support (4) teintée en noir.

10. Store selon l'une des revendications 1 et 2, caractérisé par le fait qu'il présente, selon le degré de transparence à la lumière voulu, une perforation plus ou moins grande sous la forme de trous (7).

_Fig. 1_

_Fig. 2_

_Fig. 4_

_Fig. 3_